# EUROPEAN PATENT APPLICATION

(11) **EP 2 159 985 A1**
(43) Date of publication of application: **03.03.2010**
(21) Application number: 09157634.8
(22) Date of filing: 08.04.2009
(51) Int. Cl.: H04L 29/06

(54) **Method, apparatus and system for scheduling contents**

(30) Priority: 29.08.2008 CN 200810198183
(71) Applicant: Huawei Technologies Co., Ltd., Longgang District Shenzhen 518129 (CN)
(72) Inventor: Wang, Shaodong, 518129 Shenzhen Guangdong (CN)
(74) Representative: Körber, Martin Hans

(57) **Abstract**

A method, apparatus and system for scheduling contents are disclosed herein. The method includes: receiving a content request message from a content requesting device; determining a light-loaded content providing device according to the content request message, where the light-loaded content providing device is communicated with a light-loaded content storing device, and the content storing device stores contents corresponding to the content request message; and sending the contents corresponding to the content request message to the content requesting device through the light-loaded content providing device. The embodiments of the present invention take comprehensive account of the load of the storage apparatus, and select a proper server for the user to ensure the server to provide services for the user normally.

## Description

### CROSS-REFERENCE TO RELATED APPLICATIONS

This application claims a priority from the Chinese Patent Application No. 200810198183.7, filed with the Chinese Patent Office on Aug 29, 2008 and entitled "METHOD, APPARATUS AND SYSTEM FOR SCHEDULING CONTENTS ", the contents of which are incorporated herein by reference in their entirety.

### Field of the Invention

The present invention relates to the communication field, and in particular, to a method, apparatus and system for scheduling contents.

### Background of the Invention

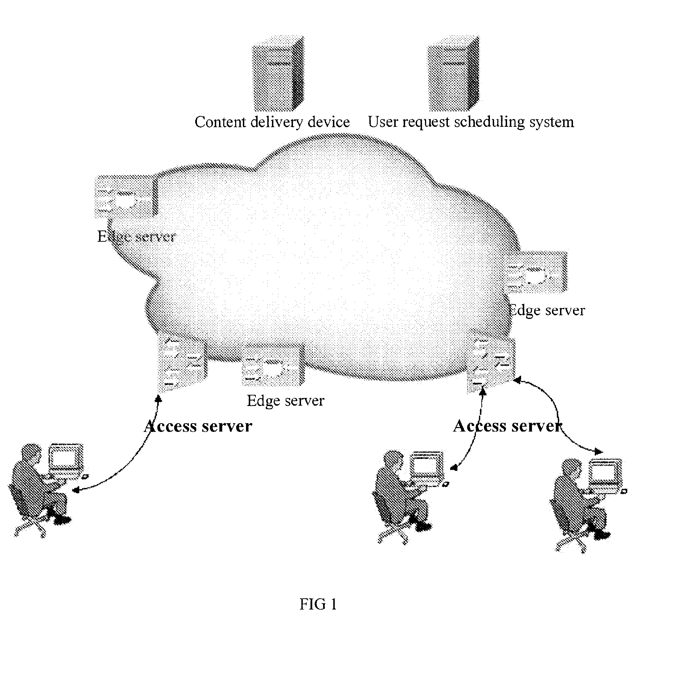

The Content Delivery Network (CDN) is a technology for improving the Quality of Service (QoS) of the Internet. As show in Figure 1, a CDN generally includes three types of apparatuses: an edge server at the edge of the network, a central content delivery apparatus which delivers the content to the edge server, and a user request scheduling system.

In the related art, the CDN is generally networked through distributed scheduling and hierarchical delivery. A scheduler is not deployed at the center of the network in a centralized way, but deployed at the local center of each service area in a distributed way, and is responsible for access scheduling in the area. The content delivery management is networked hierarchically so that the Internet Content Provider (ICP) provides one-point access, entire-network delivery and entire-network service.

In the related art, in order to obtain a specified content, the user generally accesses a Media Request Broker (MRB) through a client, and requests the MRB to select a proper edge server for providing desired contents for the user. When the MRB selects the best edge server for the user, the indices possibly considered include: the server is under a lightest load, the server owns the contents requested by the user and is closest to the user, the bandwidth from the user to the server is sufficient, and the IP packet transmission time between users is the shortest.

The related art performs optimization for one of the objectives, and disregards the limitation of the load capability of the storage apparatus of the contents requested by the user. Consequently, if the load of the media server does not reach the upper limit of the load but the load of the communicated with storage apparatus reaches the upper limit of the load, the performance of the media server is deteriorated and the media server is unable to provide services for the user normally.

### Summary of the Invention

The embodiments of the present invention are to provide a method, apparatus and system for scheduling contents, so that a proper media server is selected for the user and provides services for the user normally.

A method for scheduling content is provided in an embodiment of the present invention and includes:
receiving a content request message from a content requesting device;
determining a light-loaded content providing device according to the content request message, where the light-loaded content providing device is communicated with a light-loaded content storing device and the content storing device stores contents corresponding to the content request message; and
sending the contents corresponding to the content request message to the content requesting device through the light-loaded content providing device.

An MRB provided in another embodiment of the present invention includes:
a receiving module, adapted to receive a content request message from a content requesting device;
a determining module, adapted to determine a light-loaded content providing device according to the content request message, where the light-loaded content providing device is communicated with a light-loaded content storing device and the content storing device stores contents corresponding to the content request message; and
a control module, adapted to instruct the content providing device to send the contents corresponding to the content request message to the content requesting device.

A media manager provided in another embodiment of the present invention includes:
an obtaining module, adapted to obtain current load and upper limit of the load of a content storing device which provides contents for a content requesting device; and
a delivery control module, adapted to deliver the contents in the content storing device to other light-loaded content storing devices when the current load of the content storing device reaches the upper limit of the load.

Accordingly, a system for scheduling content provided in another embodiment of the present invention includes a content providing device and an MRB.

The content providing device is communicated with a content storing device. The content storing device is adapted to store media contents, and the content providing device is adapted to provide the MRB with the media contents required by a content requesting device so that the media contents are available for being scheduled by the MRB.

The MRB is adapted to receive the content request messages from the content requesting device, determine a light-loaded content providing device, where the light-loaded content providing device is communicated with a light-loaded content storing device, and instruct the light-loaded content providing device to send the contents corresponding to the content request message to the content requesting device.

The embodiments of the present invention bring the following benefits:
From some content storing devices, the MRB selects a light-loaded content providing device communicated with the light-loaded content storing device, and sends the request content to the content requesting device through the content providing device, thus it is ensured that the server selected for the user can provide services for the user normally.

### Brief Description of the Drawings

Figure 1 shows composition of a CDN in the related art;

Figure 2 is a flowchart of a content scheduling method in an embodiment of the present invention;

Figure 3 is a flowchart of an embodiment of block 11 in Figure 2;

Figure 4 shows the load state of the content providing device and content storing device in an embodiment of the present invention;

Figure 5 shows the load state of the content providing device and content storing device in an embodiment of the present invention;

Figure 6 is a flowchart of another embodiment of block 11 in Figure 2;

Figure 7 shows the load state of the content providing device and content storing device in an embodiment of the present invention;

Figure 8 is a flowchart of a content scheduling method in an embodiment of the present invention;

Figure 9 shows the load state of the content providing device and content storing device in an embodiment of the present invention;

Figure 10 shows a structure of a content scheduling system in an embodiment of the present invention;

Figure 11 shows a structure of a content scheduling server in the content scheduling system shown in Figure 10 in an embodiment of the present invention;

Figure 12 shows a structure of a content scheduling system in an embodiment of the present invention; and

Figure 13 shows a structure of a media manager in the content scheduling system shown in Figure 12.

### Detailed Description of the Invention

The present invention is elaborated below by reference to accompanying embodiments.

In the embodiments of the present invention, the improvement is about how the MRB selects a proper edge server for the user, and the load of a media server and the load of the communicated with storage apparatus are taken as a selecting factor, so that it is ensured that the media server selected for providing services for the user, when the load of the communicated with storage apparatus are lower than the upper limit, services may be provided for the user normally.

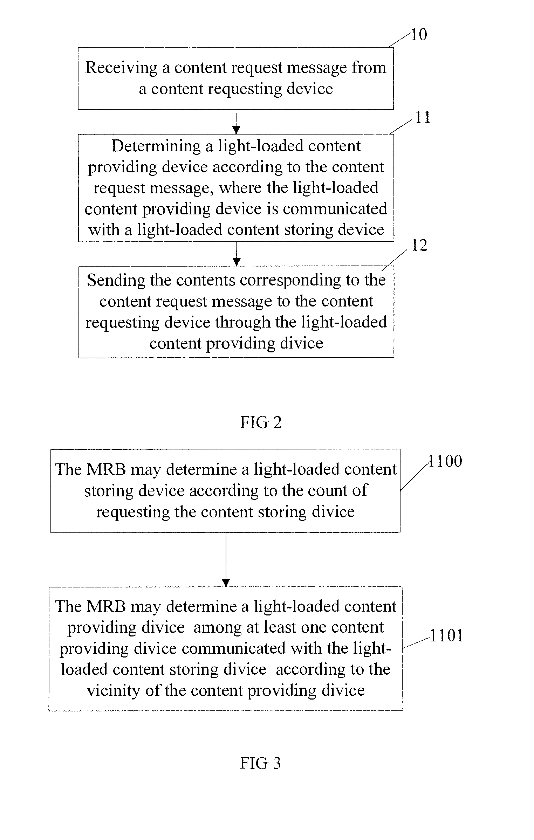

Figure 2 is a flowchart of a content scheduling method in an embodiment of the present invention, including the following process.

Block 10: A content request message which is sent from a content requesting device is received. The content request message may be sent by a user through a client in order to obtain specified content from the MRB.

Block 11: A light-loaded content providing device may be determined according to the content request message, where the light-loaded content providing device is communicated with a light-loaded content storing device.

For example, the content storing device may store contents corresponding to the content request message. The content providing device may be a media server, and the content storing device is a storage apparatus communicated with the media server. The physical meanings of the storage apparatus in an embodiment of the present invention may include:
Direct Attached Storage (DAS), Network Attached Storage (NAS), Fibre Channel storage area network (FC SAN), and Internet Protocol storage area network (IP SAN). From the perspective of the media server, the logical unit attached to each media server is a storage apparatus.

Block 12: The contents corresponding to the content request message may be sent to the content requesting device through the light-loaded content providing device.

In the blocks 10-11, a proper media server is selected for the user, and the load of the content storing device communicated with the media server is relatively light. So in the block 12, the contents required by the user are sent to a local directory of the content requesting device through the light-loaded content providing device.

In the block 11, a proper media server is selected by the user and provides contents required by the user for the user, and it is ensured that the storage apparatus selected for the user and communicated with the media server is light-loaded and can provide required contents for the user normally. According to an embodiment of the present invention, there are two scenarios.

The first scenario is: The content storing device may be communicated with one or more content providing devices, and multiple media servers may use a shared storage apparatus, as shown in Figure 3. The flowchart of the embodiment of block 11 in Figure 2 may include the following process.

Block 1100: According to the count of requesting the content storing device, the MRB may determine the light-loaded content storing device which stores the contents requested by the content requesting device. Generally, more than one content storing device, for example, one content storing device or two content storing devices, stores the contents required by the user. The content storing device being less frequently requested is under a lighter load. According to an embodiment of the present invention, the method for determining the light-loaded content storing device may include two modes: The first mode is to query the count of requesting each content storing device proactively, thus the light-loaded content storing device is determined; the second mode is to receive the count of requesting the content storing device reported by the content providing device, thus the light-loaded content storing device is determined.

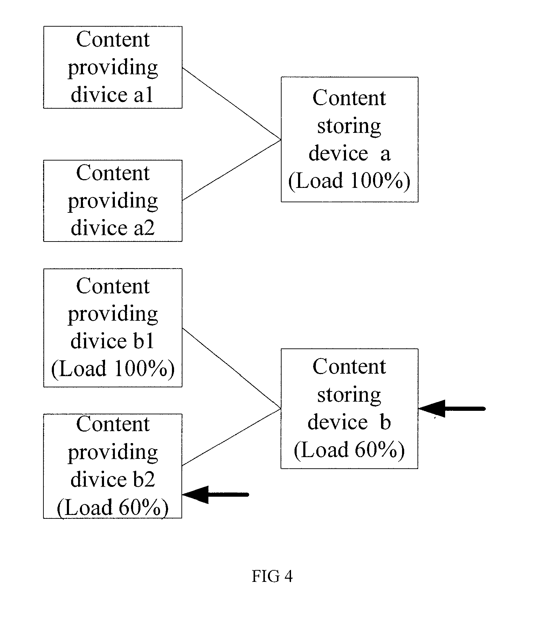

In another embodiment of the present invention, as illustrated in Figure 4, if two content storing devices, e.g. content storing device a and content storing device b, store the contents required by the user, where the load of the content storing device a is 100% and the load of the content storing device b is 60%. Therefore, the light-loaded content storing device is the content storing device b.

Block 1101: According to the vicinity of the content providing device, the MRB may determine a light-loaded content providing device of high vicinity among one or more content providing devices communicated with the light-loaded content storing device. It is worthy of attention that the content providing device of higher vicinity is under a lighter load.

The content storing device b determined in block 1100 may be communicated with multiple content providing devices. In this case, it is necessary to determine a light-loaded content providing device for providing services for the user. In another embodiment of the present invention, there are two determining modes: The first mode is to query the vicinity and load of each content providing device proactively, thus the light-loaded content providing device of high vicinity is determined; the second mode is to receive the vicinity and load reported by the content providing device, thus the content storing device of high vicinity and light load is determined.

For example, as shown in Figure 4, the content storing device b is communicated with content providing devices b1 and b2. The load of the content providing device b1 is 100%, and the load of the content providing device b2 is 60%. In this case, the content providing device b2 is determined for providing services for the user. Finally, the content providing device b2 and the content storing device b communicated with the content providing device b2 provide the required contents for the user.

The implementation of the blocks 1100-1101 has variations. In the foregoing embodiment, the block 1100 is performed first to determine the content storing device of the lightest load; and then the block 1101 is performed to determine the content providing device of the lightest load. In another embodiment of the present invention, it is also possible in the block 1101 that the load of the content providing device communicated with the content storing device of the lightest load reaches the upper limit. In this case, the MRB may perform block 1100 again to determine the content storing device of the secondarily lightest load, and then perform block 1101 to determine the lightest-loaded content providing device communicated with the content storing device of the secondarily lightest load until a proper content providing device is determined for the user.

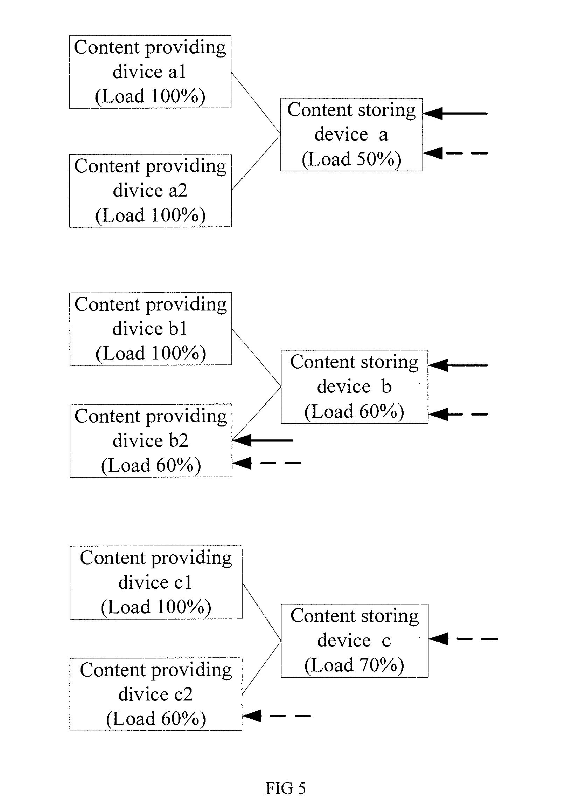

In another embodiment of the present invention,, as shown in Figure 5, the MRB may determine the lightest-loaded content storing device first, and find that the loads of the content providing device a1 and the content providing device a2 communicated with the content storing device a reach the upper limit of the load. Therefore, the MRB selects the content storing device b of the secondarily lightest load, and then determines the lightest-loaded content storing device b2 among the content providing devices communicated with the content storing device b. Finally, the content providing device b2 and the content storing device b communicated with the content providing device b2 provide the user with the required contents.

In another embodiment, the block 1100 may be performed first to determine multiple content storing devices of which the loads do not reach the upper limit of the load, and then block 1101 is performed to determine the light-loaded content providing device respectively communicated with each content storing device. Evidently, through this method, multiple content providing devices compliant with the conditions may be determined, and the MRB may further consider other factors, such as network delay and bandwidth, so that a more proper content providing device is selected for the user.

In another embodiment of the present invention, as shown in Figure 5, the MRB may determine the light-loaded content storing devices a, b and c first, and then determine the load of the content providing device respectively communicated with a, b and c, and the light-loaded content providing devices b2 and c2 may be determined. Both the content providing device b2 (together with the content storing device b communicated with the content providing device b2) and the content providing device c2 (together with the content storing device b communicated with the content providing device c2) may provide services for the user normally. In this case, the MRB may further consider other factors to select a more proper content providing device for the user, or select a content providing device randomly to provide the required contents for the user.

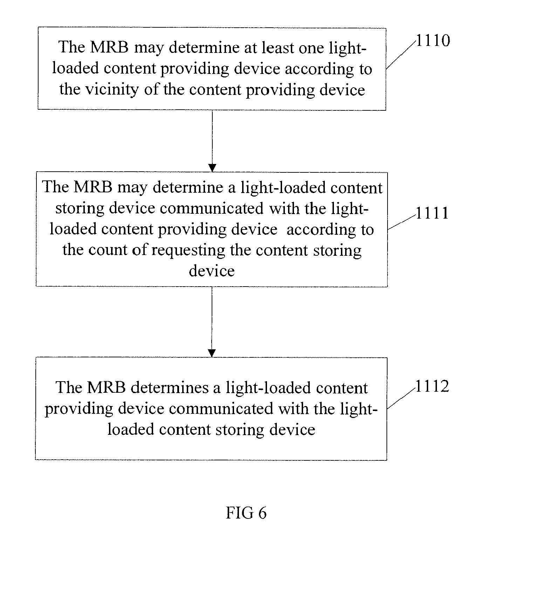

The second scenario is: One or more content storing devices are communicated with the content providing device; the content providing device may be a media server, and the content storing device is a storage apparatus communicated with the media server. In this case, one media server may use multiple storage apparatuses, as shown in Figure 6. The process of the second embodiment of block 11 in Figure 2 includes the following process.

Block 1110: According to the vicinity of the content providing device, the MRB may determine at least one light-loaded content providing device of high vicinity. The light-loaded content providing device is capable of providing the contents requested by the content requesting device.

Block 1111: The MRB may determine a light-loaded content storing device communicated with the light-loaded content providing device according to the count of requesting the content storing device.

The content providing device may be communicated with multiple content storing devices. In another embodiment of the present invention, the MRB may determine the content storing devices which store the contents required by the user first, and then determine a light-loaded content storing device according to the count of requesting each of them.

Block 1112: The MRB determines a light-loaded content providing device communicated with the light-loaded content storing device.

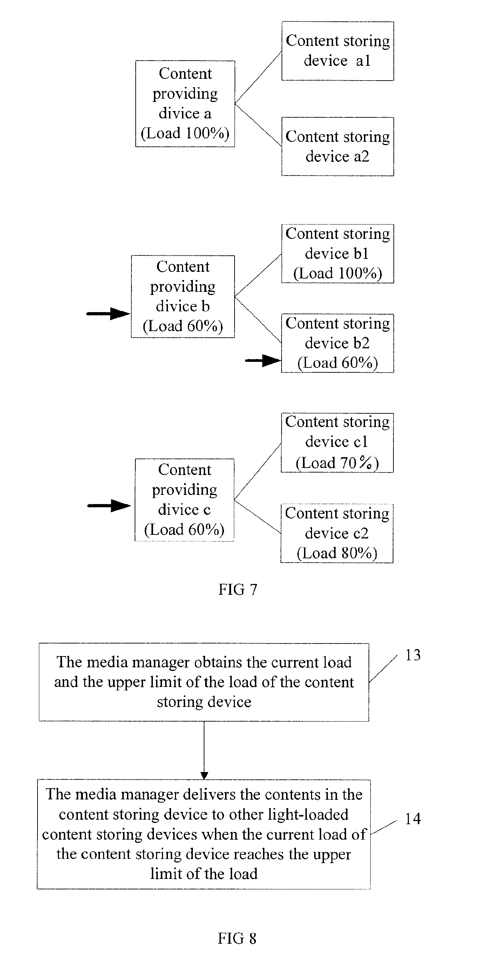

In another embodiment of the present invention, as for the content providing devices and content storing devices shown in Figure 7, the block 1110 is first performed to compare the load between the content providing devices a, b and c and select the light-loaded content providing devices b and c. Then the block 1111 is performed to select a content storing device b2 between the content storing devices b1 and b2 communicated with the light-loaded content providing device b and select a content storing device c1 between the content storing devices c1 and c2 communicated with the light-loaded content providing device c. In block 1112, because the load of the content storing device c1 is greater than the load of the content storing device b2, the content providing device b communicated with the content storing device b2 is selected to provide contents for the content requesting device.

It is worthy of attention that in the actual application, it is common that a content storing device is communicated with one or more content providing devices and a content providing device is communicated with one or more content storing devices. Therefore, in order to select a proper content providing device for the user, the blocks 1100-1101 are also applicable to the second scenario described above, and the blocks 1110-1112 are also applicable to the first scenario described above.

Figure 8 is a flowchart of a content scheduling method in another embodiment of the present invention.

In order to ensure that the media server provides better services for the user, a media manager may be used to deliver the contents in the storage apparatus according to the load of the storage apparatus. As shown in Figure 8, after the block 12 of the embodiment shown in Figure 2, the process may further include the following process.

Block 13: The media manager may obtain the current load and the upper limit of the load of the content storing device. After the block 12 in the foregoing embodiment is executed, the current load of the content storing device which provides contents for the user changes. In block 13, the content providing device may report the current load and the upper limit of the load of the content storing device to the media manager.

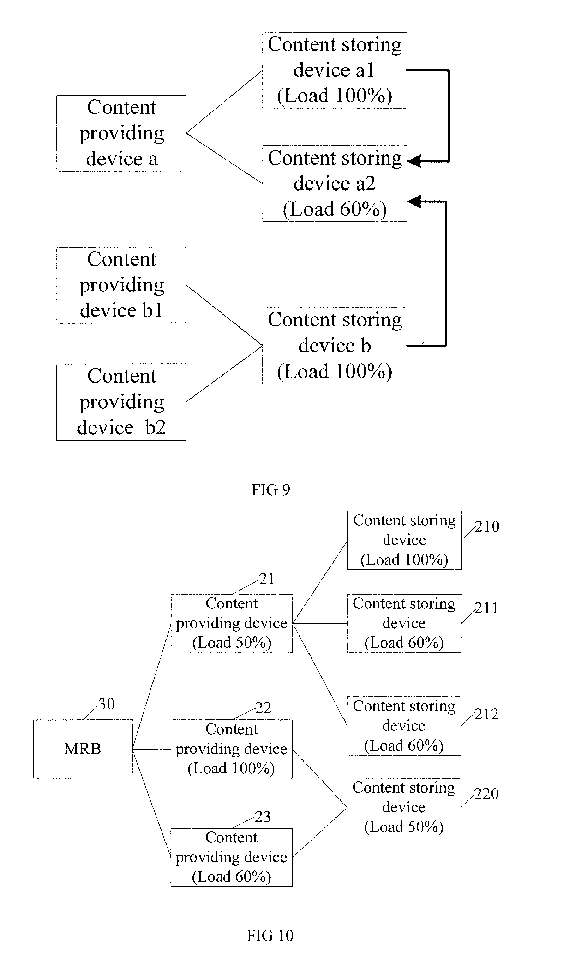

Block 14: When the current load of the content storing device reaches the upper limit of the load, the media manager may deliver the contents in the content storing device to other light-loaded content storing devices. If multiple content storing devices are communicated with the content providing device, the content being requested frequently in the content storing device may be delivered to other light-loaded content storing devices communicated with the content providing device. In this way, other content storing devices provide better services for the user. For example, as shown in Figure 9, when the content storing device a1 reaches the upper limit of the load, the contents requested frequently are delivered to the content storing device a2.

Likewise, if multiple content providing devices are communicated with one content storing device, the media manager may instruct the content storing device to reject new user requests, thus preventing the services of the content providing device communicated with the content storing device from being deteriorated. Meanwhile, the media manager delivers the contents requested frequently in the content storing device to other light-loaded content storing devices of the network, so that other content storing devices provide better services for the user. For example, as shown in Figure 9, when the load of the content storing device b reaches the upper limit, the media manager may instruct the content storing device b to reject new user requests, thus avoiding influence on the content providing device b1 or the content providing device b2 which provides services for the user. Meanwhile, the contents requested frequently in the content storing device b are delivered to the content storing device a2.

Through the embodiments of the method herein, the MRB takes account of the load of the content storing device and the load of the content providing device in providing services for the user. When the load of the content storing device reaches the upper limit, the media manager delivers the contents requested frequently in the content storing device to other light-loaded content storing devices. Therefore, the server in the system provides better services for the user.

Figure 10 shows a structure of a content scheduling system in another embodiment of the present invention, and the system may include:
an MRB 30;
at least one content providing device communicated with the MRB 30, for example, the content providing device may be a content providing device 21, a content providing device 22, or a content providing device 23 herein; and
at least one content storing device communicated with the content providing device, for example, a content storing device 210, a content storing device 211 and a content storing device 212 all communicated with the content providing device 21; and a content storing device 220 communicated with both the content providing device 22 and the content providing device 23.
The MRB 30 receives a content request message from a content requesting device, determines a light-loaded content providing device, and instructs the light-loaded content providing device to send contents to the content requesting device.

For example, supposing that the contents required by the user are stored in the content storing devices 210, 211, 212 and 220, the MRB 30 selects a proper content providing device to provide services for the user. According to a method described in the foregoing embodiment, the light-loaded content providing device is selected first, and then the light-loaded content storing device communicated with the light-loaded content providing device is selected. For example, the MRB 30 selects the content providing device 21 and the content storing device 211 communicated with the content providing device 21 to provide contents for the user. Alternatively, according to another method described in the foregoing embodiment, the light-loaded content storing device is selected first, and then the light-loaded content providing device communicated with the light-loaded content storing device is selected. For example, the MRB 30 selects the content providing device 23 and the content storing device 220 communicated with the content providing device 23 to provide contents for the user.

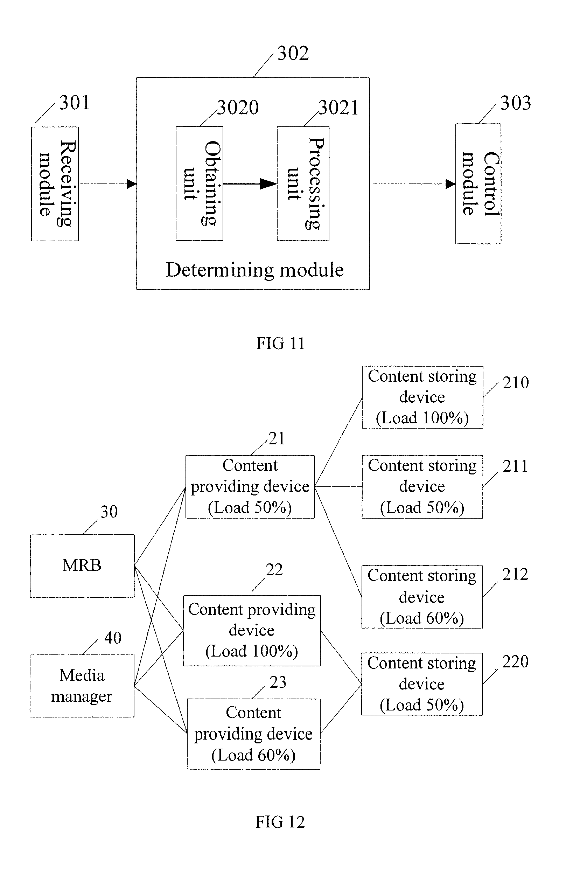

As shown in Figure 11, according to another embodiment of the present invention, the MRB 30 may further include:
a receiving module 301, adapted to receive a content request message from a content requesting device;
a determining module 302, adapted to determine a light-loaded content providing device according to the content request message, where the light-loaded content providing device is communicated with a light-loaded content storing device and the content storing device stores contents corresponding to the content request message; and
a control module 303, adapted to instruct the content providing device to send the contents corresponding to the content request message to the content requesting device.
According to another embodiment of the present invention, the determining module 302 may further include:
an obtaining unit 3020, adapted to obtain the load of the content storing device and the load of the content providing device communicated with the content storing device, where the content storing device stores contents corresponding to the content request message; and
a processing unit 3021, adapted to determine a light-loaded content storing device according to the count of requesting the content storing device, and determine a light-loaded content providing device of high vicinity among at least one content providing device communicated with the light-loaded content storing device according to the vicinity of the content providing device; or
a processing unit 3021, adapted to determine at least one light-loaded content providing device of high vicinity according to the vicinity of the content providing device, determine a light-loaded content storing device communicated with the light-loaded content providing device according to the count of requesting the content storing device, and then determine a light-loaded content providing device communicated with the light-loaded content storing device.

As shown in Figure 12, the system for scheduling content in the second embodiment of the present invention further includes a media manager 40.
In this case, the media manager 40 obtains the current load and the upper limit of the load of the content storing device, and delivers the contents in the content storing device to other light-loaded content storing devices when the current load of the content storing device reaches the upper limit of the load, so that other content storing devices provide better services for the user.

According to another embodiment of the present invention,, as shown in Figure 12, supposing that the MRB 30 selects a content providing device 21 and the content storing device 211 communicated with the content providing device 21 to provide services for the user, the content providing device 21 may report the current load of the content storing device 211 to the media manager 40. When the current load of the content storing device 211 reaches the upper limit of the load, the media manager 40 may deliver the contents requested frequently in the content storing device 211 to another content storing device 212 communicated with the content storing device 211, or to other light-loaded content storing devices. Likewise, when the MRB 30 selects the content providing device 23 and the content storing device 220 communicated with the content providing device 23 to provide services for the user, and the current load of the content storing device 220 reaches the upper limit of the load, the media manager 40 may control the content storing device 220 to reject new user requests, deliver the contents requested frequently in the content storing device 220 to other light-loaded content storing devices, such as content storing device 212.

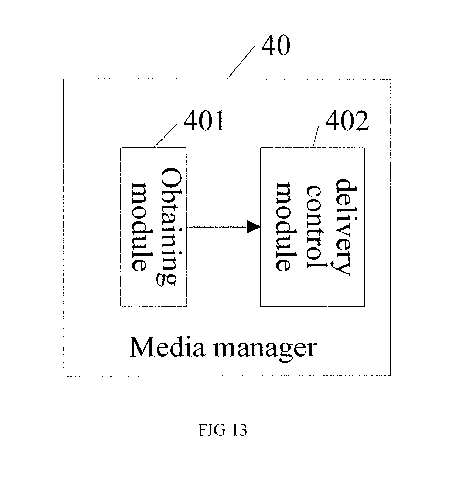

Specifically, as shown in Figure 13, according to another embodiment of the present invention, the media manager 40 may include:
an obtaining module 401, adapted to obtain the current load and the upper limit of the load of the content storing device which provides contents for the content requesting device; and
a delivery control module 402, adapted to deliver the contents in the content storing device to other light-loaded content storing devices when the current load of the content storing device reaches the upper limit of the load.

Through the embodiments of the present invention, the MRB may select a proper media server to provide services for the user by taking account of the load of the storage apparatus. When the load of the storage apparatus reaches the upper limit, the media manager may deliver the contents requested frequently in the storage apparatus to other light-loaded storage apparatuses. Therefore, other storage apparatuses provide better services for the user.

It is understandable to those skilled in the art that all or part of the preceding embodiments can be implemented by hardware instructed by a program. The program may be stored in a computer-readable storage medium. When being executed, the program may include the processes of all the foregoing method embodiments. The computer-readable storage medium may consist of one or more from the group: a magnetic disk, compact disk, Read-Only Memory (ROM), Random Access Memory (RAM), Programmable Read-Only Memory, PROM; Erasable PROM, EPROM; Flash memory; Electrically Erasable PROM, EEPROM; and hard disk drive, and so on.

Although the invention has been described through several preferred embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A method for scheduling content, **characterized in** comprising:
receiving a content request message from a content requesting device;
determining a light-loaded content providing device according to the content request
message, wherein the light-loaded content providing device is communicated with a light-loaded content storing device and the content storing device stores contents corresponding to the content request message; and
sending the contents corresponding to the content request message to the content requesting device through the light-loaded content providing device.

2. The method of claim 1, further comprising:
determining, by a Media Request Broker, MRB, a light-loaded content storing device which stores the contents requested by the content requesting device from multiple content storing devices according to count of requesting the content storing device, wherein each content storing device is communicated with at least one content providing device; and
determining, by the MRB, the light-loaded content providing device of high vicinity from at least one content providing device communicated with the light-loaded content storing device according to vicinity of the content providing device.

3. The method of claim 1 or 2, further comprising:
determining, by the MRB, at least one light-loaded content providing device of high vicinity which provides the contents requested by the content requesting device according to vicinity of the content providing device, wherein each content providing device is communicated with at least one content storing device;
determining, by the MRB, a light-loaded content storing device communicated with the light-loaded content providing device according to count of requesting the content storing device; and
determining, by the MRB, the light-loaded content providing device communicated with the light-loaded content storing device.

4. The method of claim 1, 2 or 3, after sending, by an MRB, the contents corresponding to the content request message to the content requesting device through the light-loaded content providing device, further comprising: delivering, by a media manager, the content stored in the content storing device; wherein the delivering, by the MRB, the content stored in the content storing device comprises:
obtaining, by the media manager, current load and the upper limit of the load of the content storing device; and
delivering, by the media manager, the contents stored in the content storing device to other light-loaded content storing devices when the current load of the content storing device reaches the upper limit of the load.

5. The method of any one of claims 1 to 4, wherein the content providing device is a media server, and the content storing device is a storage apparatus which is communicated with the media server.

6. An MRB, **characterized in** comprising:
a receiving module, adapted to receive a content request message from a content requesting device;
a determining module, adapted to determine a light-loaded content providing device according to the content request message, wherein the light-loaded content providing device is communicated with a light-loaded content storing device and the content storing device stores contents corresponding to the content request message; and
a control module, adapted to instruct the content providing device to send the contents corresponding to the content request message to the content requesting device.

7. The MRB of claim 6, wherein the determining module further comprises:
a obtaining unit, adapted to obtain load of the content storing device and the load of the content providing device communicated with the content storing device, wherein the content storing device stores contents corresponding to the content request message; and
a processing unit, adapted to determine a light-loaded content storing device according to count of requesting the content storing device, and determine a light-loaded content providing device of high vicinity among at least one content providing device communicated with the light-loaded content storing device according to the vicinity of the content providing device; or
a processing unit, adapted to determine at least one light-loaded content providing device of high vicinity according to the vicinity of the content providing device, determine a light-loaded content storing device communicated with the light-loaded content providing device according to the count of requesting the content storing device, and determine a light-loaded content providing device communicated with the light-loaded content storing device.

8. A media manager, **characterized in** comprising:
an obtaining module, adapted to obtain current load and upper limit of the load of a content storing device which provides contents for a content requesting device; and
a delivery control module, adapted to deliver the contents stored in the content storing device to other light-loaded content storing devices when the current load of the content storing device reaches the upper limit of the load.

9. A system for scheduling content, **characterized in** comprising a content providing device and an MRB according to claim 6 or 7, wherein,
the content providing device is communicated with a content storing device, the content storing device is adapted to store media contents, and the content providing device is adapted to provide the MRB with the media contents required by a content requesting device so that the media contents are scheduled by the MRB; and
the MRB is adapted to receive a content request messages from the content requesting device, determine a light-loaded content providing device, wherein the light-loaded content providing device is communicated with a light-loaded content storing device, and instruct the light-loaded content providing device to send the contents corresponding to the content request message to the content requesting device.

10. The system of claim 9, further comprising:
a media manager, adapted to obtain current load and upper limit of the load of a content storing device, and deliver the contents stored in the content storing device to other light-loaded content storing devices when the current load of the content storing device reaches the upper limit of the load.

11. A computer program product, **characterized in** comprising computer program code, which, when executed by a computer unit, will cause the computer unit to perform the method of any one of claims 1-5.

12. The computer program product of claim 11, wherein the computer program code is included in computer readable medium.

13. The computer program product of claim 12, **characterized in that** said computer readable medium consists of one or more from the group: magnetic disk, compact disk, Read-Only Memory, ROM; Programmable Read-Only Memory, PROM; Erasable PROM, EPROM; Flash memory; Electrically Erasable PROM, EEPROM; and hard disk drive.

## Amended claims

### Amended claims in accordance with Rule 137(2) EPC.

**1.** A method for scheduling content, **characterized in** comprising:
receiving (10) a content request message from a content requesting device;
determining (11) a light-loaded content providing device according to the content request message, wherein the light-loaded content providing device is communicated with a light-loaded content storing device and the content storing device stores contents corresponding to the content request message; and
sending (12) the contents corresponding to the content request message to the content requesting device through the light-loaded content providing device.

**2.** The method of claim 1, further comprising:
determining (1100), by a Media Request Broker, MRB, a light-loaded content storing device which stores the contents requested by the content requesting device from multiple content storing devices according to count of requesting the content storing device, wherein each content storing device is communicated with at least one content providing device; and
determining(1101), by the MRB, the light-loaded content providing device of high vicinity from at least one content providing device communicated with the light-loaded content storing device according to vicinity of the content providing device.

**3.** The method of claim 1, further comprising:
determining(1110), by the MRB, at least one light-loaded content providing device of high vicinity which provides the contents requested by the content requesting device according to vicinity of the content providing device, wherein each content providing device is communicated with at least one content storing device;
determining (1111), by the MRB, a light-loaded content storing device communicated with the light-loaded content providing device according to count of requesting the content storing device; and
determining (1112), by the MRB, the light-loaded content providing device communicated with the light-loaded content storing device.

**4.** The method of claim 1, after sending, by an MRB, the contents corresponding to the content request message to the content requesting device through the light-loaded content providing device, further comprising: delivering, by a media manager, the content stored in the content storing device; wherein the delivering, by the MRB, the content stored in the content storing device comprises:
Obtaining (13), by the media manager, current load and the upper limit of the load of the content storing device; and
delivering (14), by the media manager, the contents stored in the content storing device to other light-loaded content storing devices when the current load of the content storing device reaches the upper limit of the load.

**5.** The method of any one of claims 1 to 4, wherein the content providing device is a media server, and the content storing device is a storage apparatus which is communicated with the media server.

**6.** A Media Request Broker, MRB, **characterized in** comprising:
a receiving module (301), adapted to receive a content request message from a content requesting device;
a determining module (302), adapted to determine a light-loaded content providing device according to the content request message, wherein the light-loaded content providing device is communicated with a light-loaded content storing device and the content storing device stores contents corresponding to the content request message; and
a control module (303), adapted to instruct the content providing device to send the contents corresponding to the content request message to the content requesting device.

**7.** The MRB of claim 6, wherein the determining module further comprises:
a obtaining unit (3020), adapted to obtain load of the content storing device and the load of the content providing device communicated with the content storing device, wherein the content storing device stores contents corresponding to the content request message; and
a processing unit (3021), adapted to determine a light-loaded content storing device according to count of requesting the content storing device, and determine a light-loaded content providing device of high vicinity among at least one content providing device communicated with the light-loaded content storing device according to the vicinity of the content providing device; or
a processing unit (3021), adapted to determine at least one light-loaded content providing device of high vicinity according to the vicinity of the content providing device, determine a light-loaded content storing device communicated with the light-loaded content providing device according to the count of requesting the content storing device, and determine a light-loaded content providing device communicated with the light-loaded content storing device.

**8.** A media manager, **characterized in** comprising:
an obtaining module (401), adapted to obtain current load and upper limit of the load of a content storing device which provides contents for a content requesting device; and
a delivery control module (402), adapted to deliver the contents stored in the content storing device to other light-loaded content storing devices when the current load of the content storing device reaches the upper limit of the load.

**9.** A system for scheduling content, **characterized in** comprising a content providing device (21,23) and an MRB (30) according to claim 6 or 7, wherein,
the content providing device (21,23) is communicated with a content storing device(211, 220), the content storing device (211, 220) is adapted to store media contents, and the content providing device (21,23) is adapted to provide the MRB with the media contents required by a content requesting device so that the media contents are scheduled by the MRB; and
the MRB (30) is adapted to receive a content request messages from the content requesting device, determine a light-loaded content providing device (21, 23), wherein the light-loaded content providing device (21, 23) is communicated with a light-loaded content storing device (211, 220), and instruct the light-loaded content providing device (21, 23) to send the contents corresponding to the content request message to the content requesting device.

**10.** The system of claim 9, further comprising:
a media manager (40), adapted to obtain current load and upper limit of the load of a content storing device (211, 220), and deliver the contents stored in the content storing device to other light-loaded content storing devices (21, 23) when the current load of the content storing device reaches the upper limit of the load.

**11.** A computer program product, **characterized in** comprising computer program code, which, when executed by a computer unit, will cause the computer unit to perform the method of any one of claims 1-5.

**12.** The computer program product of claim 11, wherein the computer program code is included in computer readable medium.

**13.** The computer program product of claim 12, **characterized in that** said computer readable medium consists of one or more from the group: magnetic disk, compact disk, Read-Only Memory, ROM; Programmable Read-Only Memory, PROM; Erasable PROM, EPROM; Flash memory; Electrically Erasable PROM, EEPROM; and hard disk drive.
